(19) Europäisches Patentamt
European Patent Office
Office européen des brevets

(11) Veröffentlichungsnummer: **0 086 402**
**A1**

(12) # EUROPÄISCHE PATENTANMELDUNG

(21) Anmeldenummer: **83100991.5**

(22) Anmeldetag: **03.02.83**

(51) Int. Cl.[3]: **A 01 N 47/36**
// (A01N47/36, 43/64)

(30) Priorität: **16.02.82 DE 3205418**

(43) Veröffentlichungstag der Anmeldung: **24.08.83**
**Patentblatt 83/34**

(84) Benannte Vertragsstaaten: **AT BE CH DE FR GB IT LI NL SE**

(71) Anmelder: **BAYER AG, Zentralbereich Patente, Marken und Lizenzen, D-5090 Leverkusen 1, Bayerwerk (DE)**

(72) Erfinder: **Schmidt, Robert R., Dr., Im Waldwinkel 110, D-5060 Bergisch-Gladbach 2 (DE)**
Erfinder: **Schlee, Hans Georg, Dr., Florastrasse 25, D-5090 Leverkusen 3 (DE)**

(54) **Selektiv-herbizide Mittel enthaltend ein Triazindion in Kombination mit einem Sulfonamid.**

(57) Die neue, synergistische Wirkstoffkombination bestehend aus

(1) 1-Amino-3-(2,2-dimethylpropyl)-6-ethylthio-1,3,5-triazin-2,4(1H,3H)-dion der Formel I

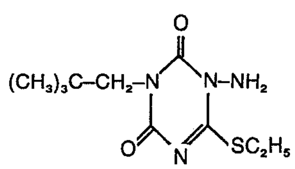

(I)

und

(2) N-[(4-Methoxy-6-methyl-1,3,5-triazin-2-yl)-aminocarbonyl]-2-chlorbenzolsulfonamid (Chlorsulfuron) der Formel II

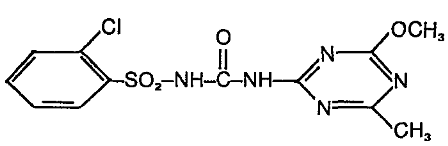

(II)

kann mit besonderem Vorteil zur selektiven Unkrautbekämpfung in Getreidekulturen verwendet werden, wobei auch sonst schwer bekämpfbare Schadgräser, wie z.B. Echinochloa crus galli, sicher miterfaßt werden.

EP 0 086 402 A1

BAYER AKTIENGESELLSCHAFT 5090 Leverkusen, Bayerwerk

Zentralbereich
Patente, Marken und Lizenzen Bi/m-c
Typ III

Selektiv-herbizide Mittel enthaltend ein Triazindion in Kombination mit einem Sulfonamid

Die Erfindung betrifft eine neue herbizide, synergistische Wirkstoffkombination, die aus einem bekannten Triazindion einerseits und einem bekannten Sulfonamid andererseits besteht und mit Vorteil zur selektiven Unkrautbekämpfung, vorzugsweise in Getreidekulturen, verwendet werden kann.

Es ist bereits bekannt geworden, daß 1-Amino-3-(2,2-dimethylpropyl)-6-ethylthio-1,3,5-triazin-2,4(1H, 3H)-dion als Herbizid verwendet werden kann (vgl. z.B. DK-PS 136 067).

Ferner ist bekannt, daß N-[(4-Methoxy-6-methyl-1,3,5-triazin-2-yl)-aminocarbonyl]-2-chlorbenzolsulfonamid herbizid wirksam ist (vgl. DE-OS 27 15 786).

Beide Verbindungen zeigen eine gute Verträglichkeit in Getreidekulturen, weisen aber gegenüber wichtigen Unkräutern und Gräsern gewisse Schwächen auf.

Es wurde nun überraschend gefunden, daß die neue Wirkstoffkombination bestehend aus

(1) 1-Amino-3-(2,2-dimethylpropyl)-6-ethylthio-1,3,5-triazin-2,4(1H,3H)-dion (Ametridion) der Formel I

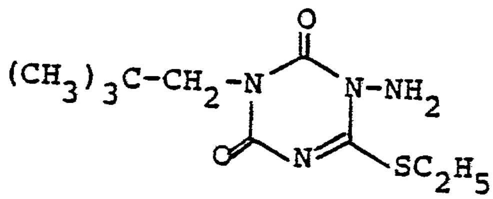

(I)

und

(2) N-/(4-Methoxy-6-methyl-1,3,5-triazin-2-yl)-aminocarbonyl/-2-chlorbenzolsulfonamid (Chlorsulfuron) der Formel II

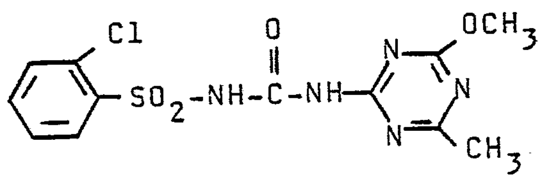

(II)

eine besonders hohe herbizide Wirksamkeit aufweist, bei gleichzeitig guter Verträglichkeit in Getreide.

Überraschenderweise ist die Wirksamkeit der erfindungsgemäßen Wirkstoffkombination wesentlich höher als die Summe der Wirkungen der einzelnen Wirkstoffe. Es liegt ein nicht vorhersehbarer echter synergistischer Effekt vor und nicht nur eine Wirkungsergänzung. Die neue Wirkstoffkombination stellt somit eine wertvolle Bereicherung der Selektivherbizide, insbesondere der Getreideherbizide, dar.

Als Unkräuter, die im allgemeinen als Verunreinigung in Getreidekulturen auftreten und durch die erfindungsgemäße Wirkstoffkombination sicher bekämpft werden, seien beispielsweise genannt:

<u>dikotyle Unkräuter der Gattungen:</u> Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea; sowie

<u>monokotyle Unkräuter der Gattungen:</u> Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Verwendung der erfindungsgemäßen Wirkstoffkombination ist jedoch keineswegs auf diese Gattungen beschränkt, sondern erstreckt sich in gleicher Weise auch auf andere Pflanzen.

Besonders hervorzuheben ist nochmals die sichere Wirkung der neuen Wirkstoffkombination auch gegen sonst schwer bekämpfbare Schadgräser, wie z.B. Echinochloa crus galli oder Amaranthus, sowie ihre sehr gute Verträglichkeit in Getreide. Als Getreidearten seien hier

Weizen, Gerste, Hafer und Roggen genannt. Die Verwendung der neuen Wirkstoffkombination als selektives Getreideherbizid ist daher besonders zu empfehlen, wobei ihr breites Unkrautspektrum von besonderem Vorteil ist.

Der synergistische Effekt der erfindungsgemäßen Wirkstoffkombination ist bei bestimmten Konzentrationsverhältnissen besonders stark ausgeprägt. Jedoch können die Gewichtsverhältnisse der Wirkstoffe in der Wirkstoffkombination in relativ großen Bereichen variiert werden. Im allgemeinen entfallen auf 1 Gewichtsteil Wirkstoff der Formel (I) 0,0001-10 Gewichtsteile, vorzugsweise 0,001-1 Gewichtsteile Wirkstoff der Formel (II).

Die erfindungsgemäßen Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsionskonzentrate, Wirkstoff-imprägnierte Natur- und synthetische Stoffe, Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: Z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

In den Formulierungen können als weitere Zusätze Farbstoffe wie anorganische Pigmente, zum Beispiel Eisenoxid, Titanoxid, Ferrocyanblau und organische Farbstoffe, wie Alizarin-, Azo-, Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäße Wirkstoffkombination wird im allgemeinen in Form von Fertigformulierungen zur Anwendung gebracht. Die in der Wirkstoffkombination enthaltenen Wirkstoffe können aber auch als Einzelformulierungen bei der Anwendung gemischt, d.h. in Form von Tankmischungen zur Anwendung gebracht werden.

Die neue Wirkstoffkombination kann als solche oder in ihren Formulierungen weiterhin auch in Mischung mit anderen bekannten Getreide-Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Ferner sind Mischungen mit mineralischen und vegetabilischen Ölen möglich.

Die neue Wirkstoffkombination kann als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombination können in einem gewissen Bereich variiert werden; sie hängen u.a. vom Wetter und von den Bodenfaktoren ab. Im allgemeinen liegen die Aufwandmengen zwischen 0,01 und 5 kg Wirkstoffkombination pro ha, vorzugsweise zwischen 0,05 und 5 kg/ha.

Die erfindungsgemäße Wirkstoffkombination kann sowohl vor als auch nach dem Auflaufen der Pflanzen appliziert werden. Sie kann auch vor der Saat in den Boden eingearbeitet werden.

Die gute herbizide Wirkung der neuen Wirkstoffkombination geht aus den nachfolgenden Beispielen hervor. Während die einzelnen Wirkstoffe in der herbiziden Wirkung Schwächen aufweisen, zeigt die Kombination eine sehr breite Unkrautwirkung, die über eine einfache Wirkungssummierung hinausgeht.

0086402

Ein synergistischer Effekt liegt bei Herbiziden immer dann vor, wenn die herbizide Wirkung der Wirkstoffkombination größer ist als die der einzeln applizierten Wirkstoffe.

Die zu erwartende Wirkung für eine gegebene Kombination zweier Herbizide kann wie folgt berechnet werden (vgl. COLBY, S.R., "Calculating synergistic and antagonistic responses of herbicide combinations", Weeds 15, Seiten 20-22, 1967):

Wenn X = % Schädigung durch Herbizid A bei p kg/ha Aufwandmenge und
Y = % Schädigung durch Herbizid B bei q kg/ha Aufwandmenge und
E = die erwartete Schädigung der Herbizide A u. B, bei p und q kg/ha Aufwandmenge,
dann ist $E = X + Y - \frac{X \cdot Y}{100}$ .

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombination bei den Unkräutern größer ist als die berechnete, d.h., daß die neue Wirkstoffkombination synergistisch wirkt.

Beispiel A

Pre-emergence-Test

| | | |
|---|---|---|
| Lösungsmittel: | 5 Gewichtsteile | Aceton |
| Emulgator: | 1 Gewichtsteil | Alkylarylpolyglycolether |

Zur Herstellung einer zweckmäßigen Wirkstoffzubereitung vermischt man 1 Gewichtsteil Wirkstoff bzw. Wirkstoffkombination mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Abtötung

Wirkstoffe, Aufwandmengen und Resultate gehen aus der nachfolgenden Tabelle hervor:

Tabelle A

pre-emergence Test / Gewächshaus

| Wirkstoff bzw. wirkstoffkombination ** | Aufwandmenge kg/ha | Wirkung bzw. Schädigung in % | | | | | |
|---|---|---|---|---|---|---|---|
| | | Echinochloa | | Amaranthus | | Weizen | |
| | | gef.* | ber.* | gef.* | ber.* | gef.* | ber.* |
| (I) - bekannt - | 0,7 | 20 | | 50 | | 0 | |
| (II) - bekannt - | 0,01 | 50 | | 85 | | 0 | |
| (I) + (II) - erfindungsgemäß - | 0,7+0,01 | 100 | 60 | 96 | 82,5 | 0 | 0 |

** (I) = 1-Amino-3-(2,2-dimethylpropyl)-6-ethylthio-1,3,5-triazin-2,4-(1H,3H)-dion (Ametridion)

(II) = N-[(4-Methoxy-6-methyl-1,3,5-triazin-2-yl)-aminocarbonyl]-2-chlorbenzolsulfonamid (Chlorsulfuron)

* gef. = gefundene Schädigung (in Prozent)

* ber. = nach der COLBY-Formel berechnete Schädigung (in Prozent)

Patentansprüche:

1. Herbizides Mittel, gekennzeichnet durch einen Gehalt an einer Wirkstoffkombination bestehend aus

(1) 1-Amino-3-(2,2-dimethylpropyl)-6-ethylthio-1,3,5-triazin-2,4(1H,3H)-dion (Ametridion) der Formel I

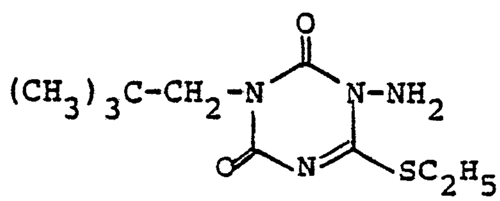 (I)

und

(2) N-[(4-Methoxy-6-methyl-1,3,5-triazin-2-yl)-aminocarbonyl]-2-chlorbenzolsulfonamid (Chlorsulfuron) der Formel II

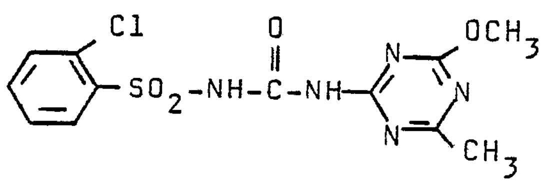 (II).

2. Herbizides Mittel nach Anspruch 1, dadurch gekennzeichnet, daß in der Wirkstoffkombination das Gewichtsverhältnis von Wirkstoff der Formel (I) zu Wirkstoff der Formel (II) zwischen 1:0,0001 und 1:10, vorzugsweise zwischen 1:0,001 und 1:1 liegt.

3. Verfahren zur selektiven Bekämpfung von Unkraut in Getreidekulturen, dadurch gekennzeichnet, daß man eine Wirkstoffkombination gemäß Anspruch 1 auf die Getreidefelder einwirken läßt.

4. Verwendung einer Wirkstoffkombination gemäß Anspruch 1 zur selektiven Unkrautbekämpfung in Getreide.

5. Verfahren zur Herstellung von herbiziden Mitteln, dadurch gekennzeichnet, daß man eine Wirkstoffkombination gemäß Anspruch 1 mit Streckmitteln und/oder oberflächenaktiven Mitteln vermischt.

Europäisches Patentamt

**EUROPÄISCHER RECHERCHENBERICHT**

0086402

Nummer der Anmeldung

EP 83 10 0991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 440 158 (DU PONT)<br>----- | 1-5 | A 01 N 47/36 //<br>(A 01 N 47/36<br>A 01 N 43/64 ) |
| | | | **RECHERCHIERTE SACHGEBIETE (Int. Cl. 3)** |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 17-05-1983 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82